**Europäisches Patentamt**

**European Patent Office**

**Office européen des brevets**

(19)

(11) Veröffentlichungsnummer: **0 021 379**
**A1**

# (12) EUROPÄISCHE PATENTANMELDUNG

(21) Anmeldenummer: **80103492.7**

(22) Anmeldetag: **21.06.80**

(51) Int. Cl.³: **C 08 F 289/00**

(30) Priorität: **30.06.79 DE 2926568**

(43) Veröffentlichungstag der Anmeldung: **07.01.81**
**Patentblatt 81/1**

(84) Benannte Vertragsstaaten: **DE FR GB IT**

(71) Anmelder: **HOECHST AKTIENGESELLSCHAFT, KALLE Niederlassung der Hoechst AG Patentabteilung Postfach 3540, Rheingaustrasse 190 D-6200 Wiesbaden 1 (DE)**

(72) Erfinder: **Fischer, Wilhelm, Dr., Hans-Sachs-Strasse 2, D-6780 Pirmasens (DE)**
Erfinder: **Holst, Arno, Dr., Drususstrasse 3, D-6200 Wiesbaden (DE)**
Erfinder: **Perplies, Eberhard, Dr., Rhönstrasse 11, D-6229 Walluf (DE)**

(54) **Verfahren zur Herstellung von hydrophilierten Pfropfpolymerisaten aus Proteinen und deren Verwendung.**

(57) Die Erfindung betrifft ein Verfahren zur Herstellung von hydrophilierten Pfropfpolymerisaten aus Vinylmonomeren und Proteinen durch Umsetzung von Proteine enthaltenden oder aus diesen bestehenden tierischen Produkten oder modifizierten Formen dieser Produkte mit mindestens einem Vinylmonomeren unter eine Pfropfung bewirkenden Bedingungen. Bei diesem Verfahren werden die in kleinteiliger Form vorliegenden Proteine oder Proteine enthaltenden, gegebenenfalls modifizierten Produkte mit als Substituenten saure, basische oder salzhaltige Gruppen tragenden Vinylmonomeren in flüssigem Reaktionsmedium unter Einfluß von Radikal- oder Redoxinitiatoren oder unter Einfluß von energiereicher Strahlung umgesetzt. Als Ausgangsstoffe werden beispielsweise Kollagene, Lederabfälle, Chromfalzspäne oder Wollfasern eingesetzt. In einer Abwandlung des Verfahrens werden Vinylmonomere eingesetzt, die Substituenten tragen, die erst nach Beendigung der Pfropfpolymerisation zu sauren, basischen oder salzartigen Gruppen hydrolisiert werden. Insbesondere können die nach den erfindungsgemäßen Verfahren hergestellten Pfropfpolymerisate zur Aufnahme und/oder Zurückhaltung von wäßrigen Flüssigkeiten oder von Feuchte verwendet werden.

HOECHST AKTIENGESELLSCHAFT
KALLE Niederlassung der Hoechst AG

Hoe 79/K 029     - 1 -     20. Juni 1980
WLK-Dr.I.-dg

Verfahren zur Herstellung von hydrophilierten Pfropfpolymerisaten aus Proteinen und deren Verwendung

Die Erfindung betrifft ein Verfahren zur Herstellung von
hydrophilierten Pfropfpolymerisaten aus Vinylmonomeren
und Proteinen tierischer Herkunft und die Verwendung
dieser Pfropfpolymerisate.

Hydrophile (quellfähige) hochmolekulare Verbindungen haben
beispielsweise große Bedeutung als Zusatz oder alleiniger
Bestandteil in Massen, die physiologische Flüssigkeiten
wie Harn, Blut, Schweiß oder Speichel aufsaugen können,
also auf den Gebieten der Babypflege, der Monatshygiene
und für den Arzt- und Krankenhausbedarf. In zunehmendem
Maße wird die in den dort vorhandenen Saugkörpern vornehmlich eingesetzte Cellulose wenigstens teilweise durch
halb- oder vollsynthetische quellfähige, hochmolekulare
Verbindungen ersetzt (z. B. Polyacrylamid-, Polyethylenoxid-, Cellulose- oder Stärkederivate), weil die Anforderungen der Verbraucher einerseits auf weniger voluminöse
Gebilde (z. B. Minibinden, Slipeinlagen, dünnere Windelhöschen), andererseits auf größere Saug- und Quellfähigkeit und ein größeres Rückhaltevermögen für die physiologischen Flüssigkeiten hinzielen.

Ein weiteres Anwendungsgebiet für quellfähige hochmolekulare Verbindungen ist die Verbesserung der Wasserdampfaufnahmefähigkeit und/oder -durchlässigkeit von gebundenen
Vliesen, selbsttragenden flächigen Polymergebilden oder

HOECHST   AKTIENGESELLSCHAFT
KALLE  Niederlassung der Hoechst AG

- 2 -

Beschichtungen, die für verschiedene technische Anwendungsgebiete von Interesse sind. Dazu zählen ihre substituierenden Anwendungen vor allem für Leder oder bestimmte Textilien
auf deren Einsatzgebieten, z. B. für Schuhe (Schuhobermaterial, Futter, Sohlen), Täschnerwaren, Polsterbezüge, Oberbekleidung ("Leder"- und Allwetterbekleidung), Textilien
bzw. Haushaltshilfsmittel (Tischdecken, Fenster-"Leder",
Wischtücher) oder für Abdeckungen (Zeltmaterial, Planen).
Insbesondere auf diesem Anwendungsgebiet ist auch der Einsatz von natürlich vorkommenden Polymeren (z. B. Polysacchariden oder Proteinen) bekannt, wobei in der Regel
der mit unmodifizierten natürlich vorkommenden Polymeren
erzielbare Effekt über eine bloße Transportwirkung oder
eine Oberflächenveränderung (Aufrauhung) nicht hinausgeht.
Aus dem Stand der Technik sind beispielsweise die folgenden Schriften bekannt:

Aus der DE-PS 16 19 252 ist der Zusatz von feinteiligen
Materialien (bis zu 1 mm lang) zu Faservliesen bei der
Herstellung von Syntheseleder (Kunstleder) bekannt, wobei
neben Teilchen aus Polyurethan oder Polyamid auch solche
aus Reyon, Zellstoff, Gummi oder Leder eingesetzt werden.

Das Verfahren zur Herstellung von velourartigem Kunstleder gemäß der DE-AS 19 01 950 wird so durchgeführt, daß
feine Teilchen von Polyurethan-Elastomeren mit feinen
Pulvern aus Natur- oder Synthesefasern mit Hilfe eines
Klebemittels auf oder in Unterlagen verklebt werden.

HOECHST AKTIENGESELLSCHAFT
KALLE Niederlassung der Hoechst AG

- 3 -

In der DE-AS 21 13 383 wird ein Verfahren zur Herstellung mikroporöser, wasserdampf- bzw. feuchtigkeitsdurchlässiger Folien beschrieben, bei dem ein quellfähiges Material mitverwendet wird; als geeignete quellfähige Materialien werden u. a. Eialbumin und Casein genannt.

Aus dem Stand der Technik sind auch bereits Verfahren bekannt, durch die insbesondere als flächenhafte Gebilde (z. B. Häute, Felle, Leder) vorliegende Proteine oder Proteine enthaltende Massen durch chemische Umsetzungen modifiziert werden:

Aus der US-PS 1 965 008 ist ein Verfahren zur Umsetzung von natürlichen polymeren Aminosäuren wie Knochenleim, Casein, Albumin oder Wolle mit Alkylenoxiden wie Ethylenoxid bekannt. Die Reaktion wird unter alkalischen Bedingungen entweder mit relativ wenig Feuchtigkeit (Wasser) unter Druck oder mit relativ viel Feuchtigkeit drucklos durchgeführt.

Das Verfahren zur Herstellung von esterähnlichen Umwandlungsprodukten des Caseins gemäß der US-PS 1 979 601 wird unter neutralen bis schwach-sauren Bedingungen durchgeführt, wobei man Casein so lange mit einem Alkylenoxid reagieren läßt, bis das Reaktionsprodukt alkalische Reaktion zeigt. Die Reaktionsprodukte sollen Hydroxyalkylester des Caseins und unlöslich in Wasser, aber löslich in wäßrigen, sauren Lösungen sein.

HOECHST AKTIENGESELLSCHAFT
KALLE Niederlassung der Hoechst AG

- 4 -

In der DE-PS 951 953 wird ein Verfahren zur Behandlung tierischer Haut mit polymerisationsfähigen Substanzen beschrieben, bei dem gleichartige Monomere oder Gemische ungleicher Monomerer in Form von wäßrigen Dispersionen oder Emulsionen in die Blößen (= ungegerbte Lederhaut) eingewalkt werden; gleichzeitig oder anschließend werden diese Monomeren innerhalb der Blößen polymerisiert. Dieses Verfahren soll die üblichen Gerbverfahren mit organischen (z. B. mit Phenol-Formaldehyd-Kondensationsprodukten) oder anorganischen (z. B. mit basischen Chromsalzen) Gerbstoffen ersetzen. Die Reaktion erfolgt mit oder ohne Polymerisationsbeschleuniger wie Benzoylperoxid, $Fe^{2+}$-Salzen oder $H_2O_2$ unter Polymerisation von Vinylverbindungen wie Vinylacetat, Styrol, Acryl- oder Methacrylsäure und ihren Derivaten (besonders ihren Estern) oder Butadien und dessen Derivaten. Für die Copolymerisation werden oftmals noch Monomere eingesetzt, die nach Einbau in das fertige Polymerisat zu Seitenverzweigungen Anlaß geben oder die sauren Charakter haben; dazu zählen Undecylensäure und ihre Ester, Vinylether, substituierte Acrylsäure und ihre Ester, Acrylsäure, Crotonsäure, Maleinsäureanhydrid oder Maleinsäure. Das so behandelte Leder soll eine verbesserte Wasserbeständigkeit und eine verringerte Wasserdurchlässigkeit aufweisen.

Aus der DE-PS 976 916 ist ein Verfahren zum Imprägnieren von Leder durch Behandlung mit monomeren Acrylsäureestern von Alkoholen mit mindestens 8 C-Atomen bekannt, wobei diese allein oder in Mischung mit polymerisationsfähigen Olefindicarbonsäuren wie Maleinsäure und deren Derivaten im

HOECHST AKTIENGESELLSCHAFT
KALLE Niederlassung der Hoechst AG

- 5 -

Leder polymerisiert werden. Zur Erhöhung der Faseraffinität können auch andere Monomere wie Vinylether oder Acrylsäureamid zugesetzt werden, als Polymerisationskatalysatoren werden Peroxidverbindungen wie Dibenzoylperoxid oder $H_2O_2$ verwendet. Durch diese Imprägnierung erhält das Leder ein höheres Gewicht, seine Wasserbeständigkeit wird erhöht und der Abrieb vermindert; Vergleichsversuche zeigen bei dem nach diesem Verfahren veränderten Leder eine sehr geringe Wasseraufnahme, dies gilt sowohl bei einem Vergleich mit unbehandeltem als auch mit durch andersartige Vinylmonomere behandeltem Leder.

Das Verfahren zur Herstellung von polymerisathaltigem Leder nach der DE-AS 12 81 094 wird so durchgeführt, daß in bzw. auf tierischen Häuten, Fellen oder Leder polymerisierbare Verbindungen wie Methacrylsäuremethylester, Methacrylnitril, Acrylsäuremethylester, Acrylnitril, Vinylacetat, Vinylether oder Vinylchlorid während oder nach der Imprägnierung durch Anwendung energiereicher Strahlung ($\gamma$-, Röntgen- oder Elektronenstrahlen) polymerisiert werden. Die Reaktion soll eine Pfropfpolymerisation an reaktionsfähigen Gruppen der Eiweißmoleküle in den mit den Monomeren imprägnierten Flächengebilden sein, diese Behandlung führt zu einer Herabminderung der Wasseraufnahmefähigkeit.

In dem Aufsatz "Strahlungsinduzierte Pfropfpolymerisation von Methacrylsäuremethylester auf natürliche oder modifizierte Wolle" von D.S.Varma und R.K.Sadhir in Journal of Applied Polymer Science, Vol. 22, 883 - 888 (1978) wird

HOECHST AKTIENGESELLSCHAFT
KALLE Niederlassung der Hoechst AG

- 6 -

beschrieben, daß Methacrylsäuremethylester als Monomeres auf Wolle in DMF als Lösemittel unter Einfluß der Strahlung einer $^{60}$Co-Quelle aufgepfropft werden kann; es sind auch andere Lösemittel wie Aceton, Dioxan, Ethanol, Methanol oder Benzol möglich, an Stelle von natürlich vorkommender Wolle können auch oxiderte, methylierte, reduzierte oder vernetzte Wolle-Typen eingesetzt werden. Diese oder vergleichbare Behandlungen von Wolle dienen im wesentlichen zur Stabilisierung der Wollfasern, d. h. zur Abriebverfestigung oder zur Verhinderung des Schrumpfens.

Aus dem Stand der Technik ist aber kein Verfahren bekannt, bei dem in kleinteiliger Form vorliegende Proteine aus tierischer Herkunft (z. B. Wolle, Häute) oder aus modifizierten (z. B. durch Gerben zu Leder) natürlich vorkommenden Proteinquellen hydrophiliert werden, d. h. saug- und/oder quellfähig(er) für wäßrige Flüssigkeiten oder Feuchte werden. Aufgabe der vorliegenden Erfindung ist es, ein solches Verfahren vorzuschlagen.

Die Erfindung geht aus von einem Verfahren zur Herstellung von Pfropfpolymerisaten aus Vinylmonomeren und Proteinen durch Umsetzung von Proteine enthaltenden oder aus diesen bestehenden tierischen Produkten oder modifizierten Formen dieser Produkte mit mindestens einem Vinylmonomeren unter eine Pfropfung bewirkenden Bedingungen. Das erfindungsgemäße Verfahren führt zu hydrophilierten Pfropfpolymerisaten und ist dadurch gekennzeichnet, daß die in kleinteiliger Form vorliegenden Proteine oder Proteine enthaltenden, gegebenenfalls modifizierten Produkte mit als Substituenten saure, basische oder salzartige Gruppen tragenden Vinylmonomeren in flüssigem Reaktionsmedium unter Einfluß von Radikal- oder Redoxinitiatoren oder unter Einfluß von energiereicher Strahlung umgesetzt werden.

Die derart hergestellten hydrophilierten Produkte sind wasserunlöslich, aber quell- und saugfähig, d. h. wenn sie mit wäßrigen Flüssigkeiten, insbesondere mit mehr als 50 Gew.-% Wassergehalt, oder mit anderweitig mit ihnen in Kontakt tretenden Wassermolekülen (z. B. Wasserdampf, Feuchte) in Wechselwirkung treten, nehmen sie die Wassermoleküle normalerweise unter Quellung auf und können sie innerhalb bestimmter Bereiche auch unter Druck mehr oder weniger gut zurückhalten. Unter dem Begriff "in kleinteiliger Form vorliegend" soll verstanden werden, daß die Proteine in Pulver-, Granulat- oder Faserform vorliegen, wobei auch watteartig, d. h. ohne feste Bindung vorliegende Fasergebilde darunter zu verstehen sind, da diese auch aus Einzelfasern bestehen; es sind unter diesem Begriff jedoch keine Flächengebilde wie Häute, Leder oder Felle zu verstehen, in denen die Proteine praktisch gebunden vorliegen. Die erfindungsgemäß eingesetzten Proteine weisen bevorzugt eine Größe von etwa 0,01 mm bis etwa 10 mm, insbesondere bis etwa 2,5 mm auf.

Es können als Polymerbasis aber nicht nur in reiner-chemischer Form vorliegende Proteine, sondern auch Proteine enthaltende Produkte eingesetzt werden, die gegebenenfalls auch modifiziert sind; zu den bevorzugt eingesetzten Produkten ursprünglich tierischer Herkunft zählen Kollagene, Lederabfälle und Chromfalzspäne, aber auch Wollfasern; es wird beispielsweise auf Römpps Chemie Lexikon, Franckh'sche Verlagsbuchhandlung - Stuttgart, 7. Auflage - 1976, Stichwörter
"Gerberei", "Kollagene" und "Wolle" verwiesen.

Zu den auf diese Polymerbasis aufzupfropfenden Vinylmonomeren gehören insbesondere solche, die als Substituenten
Carboxyl-, Amid-, Sulpho- oder Phospho-Gruppen in der
Säure- oder Salzform, Anhydrid-Gruppen oder Amino-Gruppen
(auch mit Alkyl-, Aralkyl- oder Arylgruppen substituierte
Amine oder basischen Stickstoff aufweisende Heterocyclen)
in der Basen- oder Salzform tragen; diese sind beispielsweise Acrylsäure oder Methacrylsäure und deren Salze, Acrylamid, Methacrylamid, Vinylsulfonsäure, Vinylphosphonsäure,
Maleinsäureanhydrid, Alkalimetallsalze der 2-Acrylamido-2-
methyl-propansulfonsäure, Alkalimetallsalze der Sulfopropyl-acrylsäure, 1,2-Dimethyl-5-vinyl-pyridinium-methylsulfat oder 2-(Methacryloxy)-ethyl-trimethylammonium-methylsulfat. Von den Vinylmonomeren werden insbesondere etwa
0,05 bis 5 Gew.-Teile pro Gew.-Teil Polymerbasis eingesetzt.
Bevorzugt werden Acryl- oder Methacrylderivate verwendet.

In einer weiteren Ausführungsform des erfindungsgemäßen
Verfahrens wird zusätzlich zur Umsetzung mit einem oder
mehreren Vinylmonomeren noch eine Vernetzung (in Copolymerisationstechnik) mit Divinylmonomeren vorgenommen, wozu
beispielsweise Methylen-bisacrylamid, Bisacrylamido-essigsäure, Methylen-bismethacrylamid, N,N'-Dimethylol-methylen-
bisacrylamid, 1,1'-Bisacrylamido-ethan oder quaternisiertes
2,5-Divinylpyridin, bevorzugt Bisacrylderivate zählen;

HOECHST AKTIENGESELLSCHAFT
KALLE Niederlassung der Hoechst AG

- 9 -

insbesondere bei Umsetzungen mit Kollagen enthaltendem Polymermaterial wird damit das Rückhaltevermögen der Stoffe für Wasser oder Feuchte gesteigert. Von diesen Vernetzern werden insbesondere etwa 0,001 bis 0,05 Gew.-Teile pro Gew.-Teil Polymerbasis eingesetzt.

Das flüssige Reaktionsmedium wird in der Regel so zusammengestellt, daß es ein Lösemittel für die Vinylmonomeren und/oder die Divinylmonomeren enthält, d. h. in vielen Fällen genügt Wasser als Flüssigkeit, oftmals ist aber auch der Zusatz eines organischen Lösemittels vorteilhaft, das Verfahren kann aber auch in einem flüssigen, ausschließlich organische Lösemittel enthaltenden Medium durchgeführt werden; die Auswahl der Flüssigkeit(en) hängt nicht nur von der Art des oder der Monomeren ab, sondern auch vom Typ der Polymerbasis und von der Art des die Pfropfung beeinflussenden Initiators. Neben Wasser werden Alkohole wie Isopropanol, Ketone wie Aceton, aber auch weniger polare oder unpolare organische Lösemittel aus der Gruppe der aliphatischen, cycloaliphatischen und aromatischen Kohlenwasserstoffe wie Hexan, Heptan, Cyclohexan oder Toluol eingesetzt; die Flüssigkeiten sollten im wesentlichen gegenüber dem Protein und den anderen Reaktionsteilnehmern bei Durchführung des erfindungsgemäßen Verfahrens nicht reaktionsfähig sein, wobei ihre Menge so lange nicht kritisch ist, wie ausreichend Flüssigkeit vorhanden ist, um eine gute Vermischbarkeit der Reaktionskomponenten und einen guten Wärmeübergang zu verwirklichen, zweckmäßig beträgt die Menge etwa 10 bis 100 Gew.-Teile pro Gew.-Teil Polymerbasis.

Die Pfropfpolymerisation wird unter Einfluß von Radikal-oder Redoxinitiatoren oder unter Einfluß von energiereicher Strahlung durchgeführt, beispielsweise mit Dibenzoylperoxid, $Fe^{2+}$-Salzen und $H_2O_2$, $\gamma$- oder Elektronen-Strahlen.

In Abwandlung des bisher beschriebenen Verfahrens können auch Vinylmonomere eingesetzt werden, die solche Substituenten tragen, die erst nach Beendigung der Pfropfpolymerisation zu sauren, basischen oder salzartigen Gruppen hydrolisiert werden; ein solcher Substituent ist beispielsweise die Nitrilgruppe, im Verfahren wird dann bevorzugt Acrylnitril als Vinylmonomeres eingesetzt.

Die erfindungsgemäß hergestellten Pfropfpolymeren zeigen - verglichen mit den Eigenschaften der Polymerbasis - ein verbessertes Saug- und Quellvermögen und können die aufgenommene Menge an Flüssigkeit oder Feuchte auch in ausreichendem Maße, d. h. mindestens ebenso gut zurückhalten. Als Quelle für die Polymerbasis können insbesondere Abfallprodukte bei der Verarbeitung von Leder oder Wolle eingesetzt werden, wodurch ein vernünftiges "Recycling" ermöglicht wird. Die Pfropfpolymeren finden bevorzugt zur Aufnahme und/oder Zurückhaltung von wäßrigen Flüssigkeiten oder von Feuchte Verwendung, wozu z. B. die eingangs aufgeführten Anwendungsgebiete, insbesondere der Einsatz in gebundenen Vliesen, selbsttragenden flächigen Polymergebilden oder Beschichtungen zählen.

Unter den in der Beschreibung und den Beispielen zur Charakterisierung der erfindungsgemäß hergestellten Pfropfpolymeren oder der Ausgangsstoffe verwendeten Parametern ist folgendes zu verstehen:

WRV Wasserrückhaltevermögen des Pfropfpoymeren in g $H_2O$, gemessen gegen 1.600-fache Erdbeschleunigung, bezogen auf 100 g des Polymeren; dsa WRV wird nach Eintauchen der Probe in Wasser bestimmt.

SV Saugvermögen des Pfropfpolymeren in g an 1 gew.-%iger wäßriger NaCl-Lösung, die von 100 g des Polymeren aufgesaugt werden.

Beispiel 1
In einem Rührgefäß mit Rückflußkühler werden 6 g Kollagen (WRV = 280, SV = 700, feinfaserig) in 150 g eines Benzin/Toluol-Gemisches (im Volumenverhältnis von 5 : 3,8) mit 0,6 g Acrylsäure in 15 ml des Lösemittelgemisches und 0,036 g Dibenzoylperoxid vermischt und während 2 h bei 73° C zur Reaktion gebracht. Das Reaktionsgemenge wird abgekühlt, auf einen pH-Wert von 7,5 gebracht, die festen Produkte werden von der Flüssigkeit durch Absaugen abgetrennt, es wird mit wäßrigem Methanol gewaschen und das Pfropfpolymere bei 60° C getrocknet; das erzeugte feinfaserige Pulver weist ein WRV von 450 und ein SV von 860 auf.

Beispiel 2
Es wird nach den Angaben des Beispiels 1 verfahren, aber

HOECHST AKTIENGESELLSCHAFT
KALLE Niederlassung der Hoechst AG

- 12 -

mit 6 g Acrylnitril und 0,01 g Dibenzoylperoxid. Nach beendeter Reaktion wird das Reaktionsgemisch durch Zugabe von wäßriger verdünnter NaOH-Lösung auf einen pH-Wert von 10 bis 11 gebracht und unter diesen Hydrolysebedingungen während etwa 30 min bei Raumtemperatur belassen. Das erzeugte feinfaserige Pulver wird nach Beispiel 1 aufgearbeitet und weist ein WRV von 300 und ein SV von 880 auf.

Beispiel 3

Es wird nach den Angaben des Beispiels 1 verfahren, aber mit 6 g Methacrylsäure und 0,01 g Dibenzoylperoxid, das erzeugte feinfaserige Pulver weist ein WRV von 460 und ein SV von 700 auf.

Beispiel 4

In einem Rührgefäß mit Rückflußkühler werden 6 g Kollagen in 150 g Wasser mit 1 ml einer $Fe^{2+}$-Lösung (0,4 g. $(NH_4)_2$ $Fe(SO_4)_2$ auf 10 g $H_2O$), 1 ml einer wäßrigen Lösung des Na-Salzes der Hydroxymethansulfinsäure (oder Formaldehydsulfoxylat) einer Konzentration von 1,5 g Salz auf 8,5 g $H_2O$, 1 ml $H_2O_2$-Lösung (1 g $H_2O_2$ auf 25 g $H_2O$) und 6 g Acrylsäure vermischt und während 1 h bei 60° C zur Reaktion gebracht. Nach erneuter Zugabe von 1 ml der $H_2O_2$-Lösung wird das Gemisch nochmals während 1 h bei 60° C zur Reaktion gebracht. Das Reaktionsgemenge wird abgekühlt, die festen Produkte werden von der Flüssigkeit durch Absaugen abgetrennt, und der Rückstand wird in 200 ml einer verdünnten wäßrigen NaOH-Lösung bei Raumtemperatur während 30 min aufgeschlämmt. Das so erhaltene Gemisch wird auf einen pH-Wert von 7,5 eingestellt, es wird erneut abgesaugt,

HOECHST AKTIENGESELLSCHAFT
KALLE Niederlassung der Hoechst AG

- 13 -

· mit wäßrigem Methanol gewaschen und bei 60° C getrocknet;
das erzeugte feinfaserige Pulver weist ein WRV von 900
und ein SV von 1.700 auf.

Beispiel 5

Es wird nach den Angaben des Beispiels 4 verfahren, aber
mit 6 g Methacrylsäure, das erzeugte feinfaserige Pulver
weist ein WRV von 320 und ein SV von 730 auf.

Beispiel 6

Es wird nach den Angaben des Beispiels 4 verfahren, aber
mit 6 g von entfetteten, gemahlenen, faserigen (ungleichmäßigen) Lederabfällen (WRV = 125, SV = 650), das erzeugte
faserige Produkt weist ein WRV von 125 und ein SV von 990
auf.

Beispiel 7

Es wird nach den Angaben des Beispiels 4 verfahren, aber
mit 6 g von nicht-entfetteten, gemahlenen, faserigen (ungleichmäßig) Lederabfällen (WRV = 90, SV = 650), das erzeugte faserige Produkt weist ein WRV von 95 und ein SV von
750 auf.

Beispiel 8

In einem Rührgefäß mit Rückflußkühler werden 32,4 g Kollagen
in 400 ml Toluol und 200 ml Aceton bei Raumtemperatur (25° C
nicht überschreiten) mit einer eisgekühlten Lösung aus 100
ml Wasser, 0,25 g Methylen-bisacrylamid, 41,9 g Acrylsäure
und 0,06 g $K_2S_2O_8$ (mit verdünnter Natronlauge auf einen
pH-Wert von 7,5 eingestellt) vermischt; anschließend wird

HOECHST AKTIENGESELLSCHAFT
KALLE Niederlassung der Hoechst AG

- 14 -

das Reaktionsgemenge vorsichtigt mit Stickstoff überlagert und während 15 min zum Sieden erhitzt. 9 mal werden zu dieser Mischung 2 ml einer 2,3 gew.-%igen wäßrigen $NaHSO_3$-Lösung und direkt danach 2 ml einer 0,6 gew.-%igen wäßrigen $K_2S_2O_8$-Lösung über einen Zeitraum von 90 min im Abstand von 10 min zugetropft; nach Einstellung des pH-Wertes auf 8,5 werden die festen Bestandteile von den flüssigen abgetrennt, der Rückstand wird mit wäßrigem Methanol gewaschen und bei 60° C getrocknet, das erzeugte Produkt weist ein WRV von 1.200 und ein SV von 650 auf.

Beispiel 9
Es wird nach den Angaben des Beispiels 8 verfahren, aber mit 32,4 g an kurzfaserigen Chromfalzspänen (WRV = 100, SV = 600), das erzeugte faserige Produkt weist ein WRV von 3.300 und ein SV von 1.200 auf.

Beispiel 10
Es wird nach den Angaben des Beispiels 8 verfahren, aber mit 32,4 g an geschnittenen Wollfasern (WRV = 53, SV = 140), das erzeugte faserige Produkt weist ein WRV von 53 und ein SV von 680 auf.

HOECHST AKTIENGESELLSCHAFT
KALLE  Niederlassung der Hoechst AG

Hoe 79/K 029          - 15 -          20. Juni 1980
                                      WLK-Dr.I.-dg


## Patentansprüche

1. Verfahren zur Herstellung von hydrophilierten Pfropfpolymerisaten aus Vinylmonomeren und Proteinen durch Umsetzung von Proteine enthaltenden oder aus diesen bestehenden tierischen Produkten oder modifizierten Formen dieser Produkte mit mindestens einem Vinylmonomeren unter eine Pfropfung bewirkenden Bedingungen, dadurch gekennzeichnet, daß die in kleinteiliger Form vorliegenden Proteine oder Proteine enthaltenden, gegebenenfalls modifizierten Produkte mit als Substituenten saure, basische oder salzhaltige Gruppen tragenden Vinylmonomeren in flüssigem Reaktionsmedium unter Einfluß von Radikal- oder Redoxinitiatoren oder unter Einfluß von energiereicher Strahlung umgesetzt werden.

2. Verfahren nach Anspruch 1, dadurch gekennzeichnet, daß als in kleinteiliger Form vorliegende Proteine oder Proteine enthaltende, gegebenenfalls modifizierte Produkte, Kollagene, Lederabfälle, Chromfalzspäne oder Wollfasern eingesetzt werden.

3. Verfahren nach Anspruch 1 oder 2, dadurch gekennzeichnet, daß die Vinylmonomeren als Substituenten Carboxyl-, Amid-, Sulpho- oder Phospho-Gruppen in der Säure- oder Salzform, Anhydrid-Gruppen oder Amino-Gruppen in der Basen- oder Salzform tragen.

4. Verfahren nach einem der Ansprüche 1 bis 3, dadurch gekennzeichnet, daß das flüssige Reaktionsmedium Wasser enthält.

HOECHST AKTIENGESELLSCHAFT
KALLE Niederlassung der Hoechst AG

- 16 -

5. Verfahren nach einem der Ansprüche 1 bis 4, dadurch gekennzeichnet, daß das flüssige Reaktionsmedium Wasser und mindestens ein organisches Lösemittel enthält.

6. Verfahren nach einem der Ansprüche 1 bis 5, dadurch gekennzeichnet, daß zusätzlich zur Umsetzung mit den Vinylmonomeren noch eine Vernetzung mit Divinylmonomeren durchgeführt wird.

7. Verfahren nach einem der Ansprüche 1 bis 6, dadurch gekennzeichnet, daß als Vinylmonomere Acryl- oder Methacrylderivate eingesetzt werden.

8. Verfahren nach Anspruch 6 oder 7, dadurch gekennzeichnet, daß als Divinylmonomere Bisacrylderivate eingesetzt werden.

9. Abwandlung des Verfahrens nach einem der Ansprüche 1 bis 8, dadurch gekennzeichnet, daß Vinylmonomere eingesetzt werden, die Substituenten tragen, die erst nach Beendigung der Pfropfpolymerisation zu sauren, basischen oder salzartigen Gruppen hydrolisiert werden.

10. Verfahren nach Anspruch 9, dadurch gekennzeichnet, daß als Substituent am Vinylmonomeren eine Nitrilgruppe vorliegt.

11. Verfahren nach Anspruch 9 oder 10, dadurch gekennzeichnet, daß als Vinylmonomeres Acrylnitril eingesetzt wird.

12. Verwendung der nach dem Verfahren eines der Ansprüche 1 bis 11 hergestellten Pfropfpolymerisate zur Aufnahme und/oder Zurückhaltung von wäßrigen Flüssigkeiten oder von Feuchte.

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | <u>US - A - 3 262 893</u> (J.J.KRAJEWSKI et al.)<br><br>* Patentansprüche 1-5; Spalte 2, Zeilen 34-45, 52-54; Spalte 2, Zeile 63 - Spalte 3, Zeile 12, Spalte 6, Zeilen 7-17 *<br><br>-- | 1-4,6-8,12 |
| | <u>FR - A - 1 314 666</u> (SWIFT & CY)<br><br>* Seite 1, rechte Spalte, letzter Absatz - Seite 2, linke Spalte, Absatz 1; Seite 2, linke Spalte, letzter Absatz *<br><br>-- | 1-3 |
| | <u>US - A - 4 007 143</u> (J.L. GARNETT et al.)<br><br>* Patentansprüche 1-4; Spalte 1, Zeilen 39-41; Spalte 5, Tabelle 5; Spalte 1, Zeile 62 - Spalte 2, Zeile 6 *<br><br>-- | 1-7,12 |
| X | CHEMICAL ABSTRACTS, Band 74, 8 März 1971, Nr. 10, Seite 25, Zusammenfassung 42974d Columbus, Ohio, US A.V. ZHELTOVA: "Properties of protein copolymers based on collagen dissolution products"<br><br>& Nauch. Tr. Mosk. Tekhnol. Inst. Legk. Prom. 1969 (Pub. 1970) No. 36, 76-83<br><br>* Zusammenfassung *<br><br>-- | 1-4,7,9-12 |
| X | CHEMICAL ABSTRACTS, Band 68, 1968 Nr. 18, Seite 7631, Zusammenfassung 78968v<br><br>./. | 1-3 |

### KLASSIFIKATION DER ANMELDUNG (Int. Cl.³)

C 08 F 289/00

### RECHERCHIERTE SACHGEBIETE (Int. Cl.³)

C 08 F 289/00
         291/00
D 06 M   10/00
D 06 M 15/00

### KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 14-10-1980 | MEULEMANS |

EPA form 1503.1   06.78

| | EINSCHLÄGIGE DOKUMENTE | | KLASSIFIKATION DER ANMELDUNG (Int.Cl. [3]) |
|---|---|---|---|
| Kategorie | Kennzeichnung des Dokuments mit Angabe, soweit erforderlich, der maßgeblichen Teile | betrifft Anspruch | |
| | Columbus, Ohio, US S.P. LUTHRA et al.:"Grafting of styrene on butadiene-acryloni- trile copolymers" & Indian J. Technol. 5(12), 398-9(1967) * Zusammenfassung * -- | | |
| A | FR - A - 1 141 393 (KODAK) | | |
| A | FR - E - 72 356 (DU PONT) | | |
| A | GB - A - 1 146 544 (NATIONAL LEAD COMPAGNY) | | RECHERCHIERTE SACHGEBIETE (Int. Cl. [3]) |
| | FR - A - 2 000 172 (THE GILETTE COMPAGNY) * Patentansprüche 1,4,6; Seite 2, Zeilen 6-15; Seite 3, Zeilen 16-26 * ---- | 1-4,7 | |